# EUROPEAN PATENT APPLICATION

(11) **EP 0 926 416 A1**
(43) Date of publication of application: **30.06.1999**
(21) Application number: 97203994.5
(22) Date of filing: 18.12.1997
(51) Int. Cl.: F16L 25/00

(54) **System for coupling pipes**

(71) Applicant: Heating Service N.V., 8980 Geluveld (BE)
(72) Inventor: Room, Guido, 8531 Hulste (BE)
(74) Representative: Leherte, Georges M.L.M., Dr.

(57) **Abstract**

System for coupling pipes, wherein a pipe end (P) is corrugated, being externally provided with a number of annular, axially alternating, radially protruding and intruding circumferential ribs (Ru) and grooves (Ri), a sealing ring (1,1') of elastic material and a lock ring (2), which are axially fixed in first and second grooves.

According to the invention, the lock ring (2) consists of two mutually separated and indentical ringhalves and coupling is achieved by means of first (3) and second (C) accessories, each being provided with a hole (7,8), which can be coupled together and which are disposed at said pipe end (P). The pipe end (P) being inserted in the hole (7) of the first accessory (3), said hole (7) in cross section being provided with a shoulder (9) having a cross-axial, concentric, first pressing surface (10) and the second accessory (C) being provided with a cross-axial, concentric, second pressing surface (11), said lock ring (2) being clamped between the first (10) and second (11) pressing surfaces when said first (3) and second (C) accessories are being coupled together.

## Description

The invention relates to a system for coupling pipes, wherein a first pipe end is corrugated, being externally provided with a number of annular, axially alternating, radially protruding and intruding circumferential ribs and grooves, a sealing ring of elastic material and a lock ring, which are axially fixed in first and second grooves, being also provided with means cooperating with said lock ring for coupling said first pipe end to a second pipe end, as well as a lock ring to be applied in such system.

Such a coupling system is known from the published British patent application UK 2 241 547.

In the known coupling system, the circumferential ribs and grooves are formed by the exterior corrugations of a corrugated pipe. A spiral spring is therein used as a lock ring. The spiral spring is fixed in axial direction in a groove, also indicated as a constriction. The second pipe end is provided with a collar, which is to slip over the spiral spring and which internally is provided with a slot, in which the spiral spring may extend more or less in a state of relaxation. This occurs when a locked position is reached, in which the spiral spring is placed opposite to the slot. A coupling of both pipe ends is therewith achieved. The elastic seal ring provides for the sealing of this coupling by closing off the concentric opening between the collar and the first pipe end. For this the elastic seal ring is disposed between a groove at the extremity of the first pipe end at the side opposite to the lock ring.

The spiral spring can only be placed at the first pipe end, if the latter is removed from the collar of the second pipe end. The spring needs to be widened to bring it across the ribs in the position wanted. The spiral spring is thereafter to be squeezed to slip over the collar. Once in the collar the spiral spring remains to be squeezed untill the lock ring reaches the lock position. This puts specific requirements to the material properties and the shape of the spiral spring. The spring force may not be too strong, otherwise it would be difficult to slip the spiral spring over the first pipe end and it would also be difficult to slip it into the collar.
The spring force may also be not too weak, because the spiral spring may otherwise hardly or not extend in the slot. Furthermore the dimensions of the slot need to be determined very accurately. If the slot is too narrow, then the lock position is hard to find and the spiral spring cannot extend in the slot, sothat no coupling is effected. If the slot is too wide then this will have a negative effect on the ridgedness of the coupling. Apart therefrom, this known coupling cannot be disassembled without being damaged.

It is an object of the invention to provide a coupling system of the type mentioned above, which compared with the known system enables a simple and quick assembling and disassembling and which puts less strict requirements to material properties and tolerance in dimensions to guarantee a reliable coupling.

A system for coupling pipes according to the invention is characterized in that the lock ring consists of two separate ring halves and said means comprising first and second accessories, which can be coupled together, each provided with a hole, the pipe end being inserted in the hole of the first accessory, said hole in cross section being provided with a shoulder having a cross-axial, concentric, first pressing surface and the second accessory being provided with a cross-axial, concentric, second pressing surface, said lock ring being clamped between the first and second pressing surfaces when said first and second accessories are being coupled together.

The invention is based on the recognition that the use of a spring/slot mechanism may be avoided by making the coupling system highly demountable, including the lock ring itself.

When applying the measure according to the invention, the lock ring may be easily placed directly in the correct groove of the pipe end by taking apart the lock ring in its two halves. The first and second surfaces are facing each other and mutually in parallel as they are both positioned cross axially i.e. perpendicularly to the axis of the pipe end. By thereafter clamping the lock ring between the first and second pressing surfaces, the first and second accessories are locked tight to the pipe end. The seal ring provides for a hermetic, water- and/or gastight sealing of the coupling. The first and second accessories also prevent the pipe end from deforming therewith maintaining an effective sealing even at high pressure rates.
The second accessory may be coupled to a second pipe end in conventional manner, e.g. by using a collar which is part of the second pipe end, as applied in the known coupling system.
The coupling allows the pipe ends to somewhat move radially which prevents torsion from occurring.

A preferred embodiment of said system according to the invention, in which the pipe end is coupled with the second accessory is characterized by a further seal ring of elastic material which is fixed in axial direction in a second groove of the pipe end.

This measure according to the invention allows to couple two corrugated pipes in a simple manner together by means of the coupling system.

A further preferred embodiment of such a coupling system is characterized in that the seal ring is disposed between the lock ring and the extremity of the first pipe end, the outer diameter of the lock ring being greater than that of the seal ring.

Another preferred embodiment of a system for coupling pipes is characterized in that the accessories are mutually coupled via a nut/screw swivel coupling.

It is another object of the invention to provide a lock ring to be applied in one of the above coupling systems according to the invention.

Such a lock ring according to the invention is characterized in that the lock ring consists of two separated ringhalves.

Such a lock ring is preferably characterized by a fitting edge having an outer diameter, which is smaller than the inner diameter of the hole of the first accessory.

The invention will now be described in more detail with reference to the drawings, wherein merely by way of example two embodiments according to the invention are shown, in which:
figure 1 shows a perspective view of an embodiment of the coupling system according to the invention;
figure 2 shows the coupling system according to figure 1 partly in cross section.

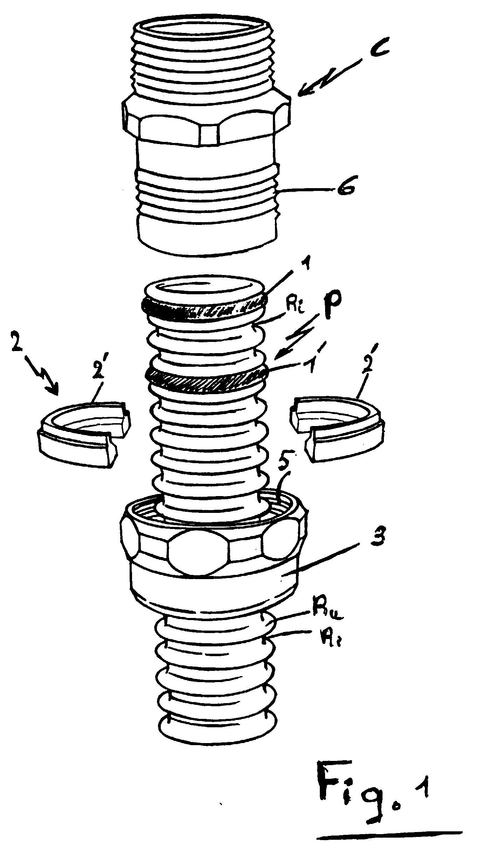

Figure 1 shows a system for coupling a pipe P and a coupling element C. Pipe P is a socalled corrugated pipe, having over its full length a corrugated external structure with annular, axially alternating, radially protruding and intruding circumferential ribs Ru and grooves Ri. The pipe P extends into the pipe end p being provided with first and second seal rings of elastic material 1 and 1' disposed in the first groove Ri and in a further groove Ri (for instance fourth groove Ri as shown), respectively. Both rings are therewith fixed in axial direction. The lock ring 2 consists of two separated ring halves. Each lock ring consists of two mutually separated ringhalves which together complete a full circle. The lock rings are each provided with fitting edge 2', extending in axial direction over about 1.5 times the width of a protruding rib. The outer diameter of the lock ring is chosen to be greater than that of the seal ring.
The lock ring is preferably made out of one complete ring, which is midway split into two halves, sothat both halves are nutually identical.
The coupling together of the pipe P and the coupling element C is achieved in a cooperation of the lock ring 2 with coupling element C and accessory 3. The coupling element C and accessory 3 can be coupled together via a nut/screw swivel coupling, the accessory 3 being implemented as a swivel nut, provided with an inner screwthread 5, the coupling element C being implemented as a swivel screw, provided with an outer screwthread 6.

The coupling element C may be coupled with a second pipe, eventually in conventional manner, e.g. by fixing this coupling element C to the second pipe end or by making the coupling element C and the second pipe end out of one piece. To understand the invention no further elaboration on this point is needed.

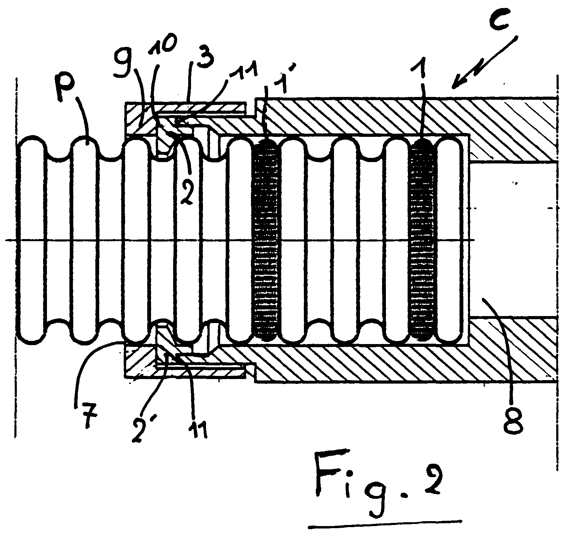

As shown more specifically in figure 2 both coupling element C and accessory 3 are each provided with a hole 7, respectively 8, the pipe end p being inserted in the hole 7 of the cooupling element C. The hole 7 is in cross section provided with a shoulder 9 having a concentric, first pressing surface 10, positioned cross axially i.e. perpendicularly to the axis of the pipe end. The coupling element C is provided at a first extremity of a cross axial, concentric, second pressing surface 11. The first and second surfaces 10 and 11 are facing each other and mutually in parallel as they both have the same cross axial position with regard to the axis of the pipe. The lock ring 2 is in the coupled situation clamped between the first and second pressing surfaces 10 and 11 of the coupling element C and accessory 3. Because the lock ring 2 on the one hand is disposed within a groove and on the other hand is thightly clamped between the first and second pressing surfaces 10 and 11 by screwing the coupling element C into the accessory 3, a reliable coupling between both pipe ends is guaranteed.

The lock ring 2 is provided with a fitting edge 2', which fits into the hole of the coupling element C, therewith positioning the lock ring 2. The lock ring 2 is therewith easy to dispose and simultaneously a proper centering thereof is achieved. The support provided by the lock ring 2 prevents the seal ring from being burdened with sideways pressure or tensile stress. A double safety in sealing is achieved with the disposal of a second seal ring 1' in a further groove Ri. The seal rings 1 and 1' shut off hermetically the concentric opening between the pipe and the hole 8 of the coupling element C, the grooves being chosen such that in mounted position both seal rings 1 and 1' are located within the hole 8.

For assembling the coupling, it suffices to screw by hand the accessory 3 into the coupling element C, which avoids the use of specific tools.
Furthermore because of the mutual interaction of the various parts of the coupling, it will be impossible to assemble the coupling incorrectly. For assembling every part needs to be disposed and mounted in its correct position. Errors are therewith avoided.

It will be clear that it is possible to implement the accessory 3 as a swivel nut, but it is also possible to chose another demountable coupling instead of a swivel nut/screw coupling e.g. a flange coupling, a bayonet catch, a clamp coupling.

The invention is applicable to coupling systems not only in all types of base or precious metals, but also in synthetic materials, for transport of all types of fluid mass, including gas or water. It can be used wherever coupling of pipes are needed, be it in straight pipes, at the inlet or outlet of an apparatus, in curved transmission pipe lines, etc.

## Claims

1. A system for coupling pipes, wherein a pipe end is corrugated, being externally provided with a number of annular, axially alternating, radially protruding and intruding circumferential ribs and grooves, a sealing ring of elastic material and a lock ring, which are axially fixed in first and second grooves, being also provided with means for cooperation with said lock ring for coupling said pipe end, **characterized in that** the lock ring consists of two separate ring halves and said means comprising first and second accessories, which can be coupled together, each provided with a hole, the pipe end being inserted in the hole of the first accessory, said hole in cross section being provided with a shoulder having a cross-axial, concentric, first pressing surface and the second accessory being provided with a cross-axial, concentric, second pressing surface, said lock ring being clamped between the first and second pressing surfaces when said first and second accessories are being coupled together.

2. A system for coupling pipes according to claim 1 **characterized in that** the seal ring is disposed between the lock ring and the extremity of the pipe end, the outer diameter of the lock ring being greater than that of the seal ring.

3. A system for coupling pipes according to claim 2, **characterized in that** the further seal ring is disposed between the further lock ring and the extremity of the pipe end, the outer diameter.

4. A system for coupling pipes according to one of claim 1 to 3, **characterized by** several seal rings being disposed at each pipe end.

5. A system for coupling pipes according to one of claim 1 to 4, **characterized in that** the accessories are mutually coupled via a nut/screw swivel coupling.

6. A system for coupling pipes according to claim 2, **characterized in that** the first accessory is a swivel nut, provided with an internal engaging with a external screwthread disposed at the extremity of the second accessory.

7. A system for coupling pipes according to one of claims 1 to 6, **characterized by** said pipe end being part of a flexible corrugated pipe, provided over its full length with annular, axially alternating, radially protruding and intruding circumferential ribs and grooves, dimensioned to provide a tight inclusion in said grooves.

8. Lock ring to be applied in a system for coupling pipes according to one of claims 1 to 7, **characterized in that** the lock ring consists of two mutually separated and identical ringhalves.

9. Lock ring according to claim 8, **characterized by** a fitting edge having an outer diameter, which is smaller than the inner diameter of the hole of the first accessory.
